# EUROPEAN PATENT SPECIFICATION

(11) **EP 3 686 520 B1**
(45) Date of publication and mention of the grant of the patent: **22.12.2021**
(21) Application number: 18858462.7
(22) Date of filing: 24.07.2018
(51) Int. Cl.: F25B 49/02, F25B 1/00, F25B 49/00, F25B 47/02

(54) **GAS LEAK AMOUNT DETECTION METHOD AND OPERATING METHOD OF REFRIGERATING APPARATUS**
VERFAHREN ZUR BESTIMMUNG DER GASLECKMENGE UND BETRIEBSVERFAHREN EINER KÜHLVORRICHTUNG
PROCÉDÉ DE DÉTECTION DE QUANTITÉ DE FUITE DE GAZ ET PROCÉDÉ DE FONCTIONNEMENT D'APPAREIL DE RÉFRIGÉRATION

(30) Priority: 19.09.2017 JP 2017178636
(43) Date of publication of application: 29.07.2020
(73) Proprietor: Daikin Industries, Ltd., Osaka-shi, Osaka 530-8323 (JP)
(72) Inventor: UENO, Akitoshi, Osaka-shi Osaka 530-8323 (JP); MABUCHI, Shougo, Osaka-shi Osaka 530-8323 (JP)
(74) Representative: Hoffmann Eitle
(86) International application number: PCT/JP2018/027694
(87) International publication number: WO 2019/058748

(56) References cited:
- EP-A1- 1 731 857
- WO-A1-2016/157519
- WO-A1-2016/157519
- JP-A- H07 198 235
- JP-A- S62 228 839
- JP-A- 2005 201 532
- JP-A- 2013 178 075
- US-A- 5 214 918

## Description

### TECHNICAL FIELD

The present invention relates to a gas leak amount detection method and a method for operating a refrigeration apparatus. More specifically, the present invention relates to a method for detecting, in a refrigerant circuit using a zeotropic refrigerant, a gas leak amount of the zeotropic refrigerant, and a method for operating a refrigeration apparatus using a zeotropic refrigerant.

### BACKGROUND ART

In order to prevent global warming, an index called a global warming potential (GWP) is used for greenhouse gases, and using gas equal to or less than a reference value is becoming obliged. In our country, for example, for refrigerants used in refrigerating units, the use of refrigerants having a global warming potential higher than 1,500 is going to be restricted after 2025.

Thus, various refrigerants having a global warming potential of 1,500 or less, having a high cooling efficiency, and being low in cost have been considered and proposed as the refrigerants used in the refrigerating units. The refrigerant which can satisfy such a demand includes a zeotropic refrigerant which is a mixture of a plurality of types of refrigerants. For example, R407H, R448A, R449B are mainly known as zeotropic refrigerants for refrigerating units. These refrigerants all include R32 as a component. Further prior art can be found in US 5 214 918 A which discloses the preamble of claim 1.

### SUMMARY OF INVENTION

### TECHNICAL PROBLEM

When a refrigerant leaks out of a refrigerant circuit, a predetermined cooling capacity cannot be exhibited depending on the amount of the leaked refrigerant. Thus, it is desired to detect, in a refrigerant circuit using a zeotropic refrigerant, a gas leak amount of the zeotropic refrigerant (in a zeotropic refrigerant, among a plurality of components, a refrigerant having the lowest boiling point normally evaporates to leak as gas to the outside).

When maintenance including charging of the leaked refrigerant can be performed within a short period of time in response to the occurrence of a gas leak, there is a small influence on the refrigerating operation. However, for example, in a refrigerating unit used in a ship, it is difficult to perform the maintenance under way. In this case, it is desired to optimize the refrigerating operation with a certain degree of gas leaked while charging the leaked refrigerant at any time.

The present invention has been made in view of the above circumstances, and an object thereof is to provide a gas leak amount detection method capable of detecting, in a refrigerant circuit using a zeotropic refrigerant, a gas leak amount of the zeotropic refrigerant, and a method for operating a refrigeration apparatus capable of optimizing the operation according to the detected gas leak amount.

### SOLUTION TO PROBLEM

A gas leak amount detection method of the present invention is defined in claim 1.

The gas leak amount detection method of the present invention detects the gas leak amount on the basis of the liquid temperature and the liquid pressure of the saturated liquid of the zeotropic refrigerant. In the case of the zeotropic refrigerant, there is a predetermined relationship between the liquid temperature and the liquid pressure of the saturated liquid. Further, when a certain component of the zeotropic refrigerant (normally, a refrigerant having the lowest boiling point) leaks, the composition of the zeotropic refrigerant changes. There is a predetermined relationship between the liquid temperature and the liquid pressure also in the saturated liquid of the zeotropic refrigerant whose composition has changed. Thus, in the saturated liquid having a certain liquid temperature, as the leak amount increases, the liquid pressure of the saturated liquid of the zeotropic refrigerant having the changed composition decreases. The gas leak amount of the zeotropic refrigerant can be detected on the basis of the liquid temperature and the liquid pressure of the saturated liquid using this relationship.

Further in the gas leak amount detection method of (1), the gas leak amount may be detected from a relationship between the liquid pressure and a refrigerant leak ratio in the saturated liquid at a certain liquid temperature, a normal refrigerant charging amount of the refrigerant circuit, and a normal component ratio of the zeotropic refrigerant. In this case, the refrigerant leak ratio (%) can be obtained from the measured liquid pressure of the saturated liquid on the basis of the previously-obtained relationship between the liquid pressure and the refrigerant leak ratio at a certain liquid temperature (given liquid temperature). Further, the gas leak amount can be detected from the leak ratio, the normal refrigerant charging amount of the refrigerant circuit, and the normal component ratio of the zeotropic refrigerant. Specifically, the gas leak amount (kg) can be obtained by the leak ratio (%) × m × w ÷ 100, where m denotes the normal component ratio of the leaked refrigerant, and w (kg) denotes the normal refrigerant charging amount of the refrigerant circuit.

(2) A method for operating a refrigeration apparatus according to a first aspect of the present invention is a method for operating a refrigeration apparatus using a zeotropic refrigerant, the method including: adjusting an opening degree of a cooling expansion valve by correcting a temperature ground according to a gas leak amount detected by the gas leak amount detection method according to (1).

In the method for operating the refrigeration apparatus according to the first aspect of the present invention, it is possible to perform the operation while changing the temperature for control according to the leak amount in view of the fact that the inclination of the temperature ground of the refrigerant on the evaporator side decreases as the gas leak amount increases.

(3) A method for operating a refrigeration apparatus according to a second aspect of the present invention is a method for operating a refrigeration apparatus using a zeotropic refrigerant, the method including: reducing a frequency of a compressor according to a gas leak amount detected by the gas leak amount detection method according to (1).

In the method for operating the refrigeration apparatus according to the second aspect of the present invention, even in a state with a gas leak, the degree of the gas leak can be reduced by making the pressure on the high-pressure side lower than that in the normal operation.

(4) A method for operating a refrigeration apparatus according to a third aspect of the present invention is a method for operating a refrigeration apparatus using a zeotropic refrigerant, the method including: increasing an airflow volume of a fan of a condenser according to a gas leak amount detected by the gas leak amount detection method according to (1).

In the method for operating the refrigeration apparatus according to the third aspect of the present invention, even in a state with a gas leak, the degree of the gas leak can be reduced by making the pressure on the high-pressure side lower than that in the normal operation.

(5) A method for operating a refrigeration apparatus according to a fourth aspect of the present invention is a method for operating a refrigeration apparatus using a zeotropic refrigerant, the method including: reducing an airflow volume of a fan of an evaporator according to a gas leak amount detected by the gas leak amount detection method according to (1).

In the method for operating the refrigeration apparatus according to the fourth aspect of the present invention, even in a state with a gas leak, the degree of the gas leak can be reduced by making the pressure on the low-pressure side lower than that in the normal operation.

### ADVANTAGEOUS EFFECTS OF INVENTION

The gas leak amount detection method of the present invention is capable of detecting, in a refrigerant circuit using a zeotropic refrigerant, a gas leak amount of the zeotropic refrigerant. Further, the method for operating the refrigeration apparatus of the present invention is capable of optimizing the operation according to the detected gas leak amount.

### BRIEF DESCRIPTION OF DRAWINGS

[FIG. 1] FIG. 1 is an explanatory diagram of an example of a refrigeration apparatus to which a gas leak amount detection method of the present invention is applied.
[FIG. 2] FIG. 2 is a diagram illustrating an example of the relationship between the leak ratio and the liquid pressure in a saturated liquid of a zeotropic refrigerant.
[FIG. 3] FIG. 3 is a Mollier diagram of an example of the zeotropic refrigerant.

### DESCRIPTION OF EMBODIMENTS

Hereinbelow, a gas leak amount detection method and a method for operating a refrigeration apparatus of the present invention will be described in detail with reference to the accompanying drawings. Note that the present invention is not limited to these examples, and it is intended that the present invention is defined by the claims and includes meanings equivalent to the claims and all modifications within the claims.

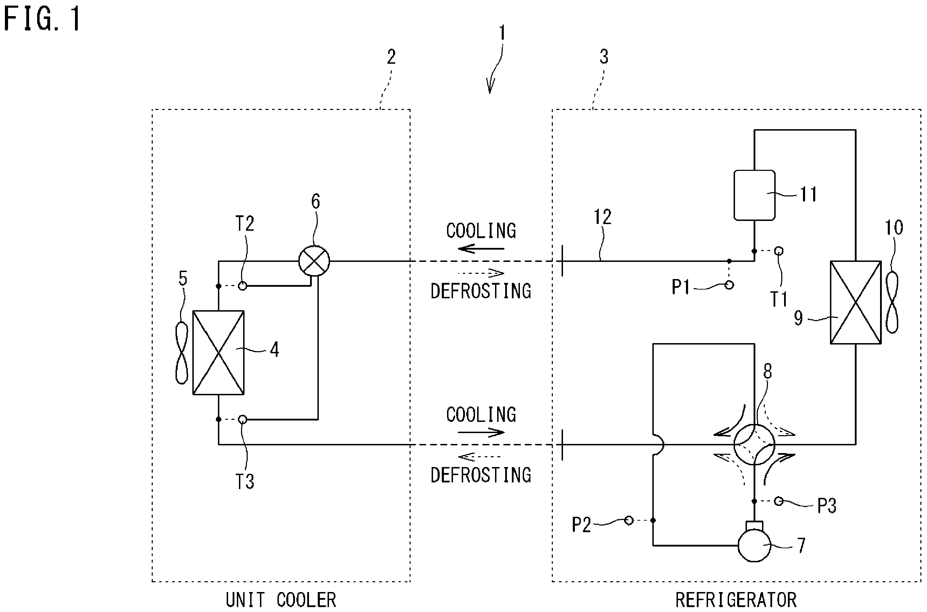

FIG. 1 is an explanatory diagram of an example of a refrigeration apparatus 1 to which the gas leak amount detection method of the present invention is applied. The refrigeration apparatus 1, which is a refrigerating unit, includes a unit cooler 2 and a refrigerator 3. The unit cooler 2 plays a role equal to an indoor unit in a common air conditioner, and includes an evaporator 4, a fan 5, and a cooling expansion valve 6. On the other hand, the refrigerator 3 plays a role equal to an outdoor unit in a common air conditioner, and includes an inverter compressor 7, a four-way switching valve 8, a condenser 9, a fan 10, and a receiver 11.

A low-pressure sensor P2 is disposed on the intake side of the compressor 7, and a high-pressure sensor P3 is disposed on the discharge side of the compressor 7. A liquid temperature sensor T1, which measures the temperature of a saturated liquid of a refrigerant, and a liquid pressure sensor P1, which measures the pressure of the saturated liquid, are disposed near downstream of the receiver 11 in a normal operation (cooling) of the refrigeration apparatus 1. Further, an inlet temperature sensor T2 is disposed on the inlet side of the evaporator 4, and an outlet temperature sensor T3 is disposed on the outlet side of the evaporator 4 in the normal operation of the refrigeration apparatus 1.

The compressor 7, the four-way switching valve 8, the condenser 9, the receiver 11, the cooling expansion valve 6, and the evaporator 4 are connected in this order through pipes to constitute a refrigerant circuit 12. In the normal operation, the refrigerant flows through a path indicated by solid-line arrows in FIG. 1, and air which has been heat-exchanged with the refrigerant flowing through the evaporator 4 in the evaporator 4 is supplied by the fan 5. On the other hand, in defrosting, the refrigerant flows through a path indicated by broken-line arrows in FIG. 1, and defrosting is performed using air (hot air) which has been heat-exchanged with the refrigerant flowing through the evaporator 4, which functions as a condenser, in the evaporator 4.

The refrigeration apparatus 1 according to the present embodiment uses R407H, which is a zeotropic refrigerant, as the refrigerant. A zeotropic refrigerant is a mixture of a plurality of types of refrigerants. For example, R407H is a mixture of 32.5 wt% of R32, 15.0 wt% of R125, and 52.5 wt% of R134a, and has a boiling point of -44.6°C and a global warming potential of 1,495. Further, R407C is a mixture of 23.0 wt% of R32, 25.0 wt% of R125, and 52.0 wt% of R134a, and has a boiling point of -43.8°C and a global warming potential of 1,770. Note that the zeotropic refrigerant usable in the present invention is not limited to these refrigerants. For example, R448H, R449B, R454A, R457A, and R455A can also be used.

When a gas leak occurs in the refrigeration apparatus 1 using the zeotropic refrigerant, among the refrigerants constituting the zeotropic refrigerant, the refrigerant having the lowest boiling point evaporates to leak as gas. In the case of R407H, R32 first evaporates to leak as gas. The composition ratio or the component ratio (hereinbelow, referred to as the "component ratio") of the refrigerants constituting the zeotropic refrigerant changes due to the leak of one of the refrigerants constituting the zeotropic refrigerant (the refrigerant having the lowest boiling point). The change in the component ratio results in a change in the characteristics of the zeotropic refrigerant.

In the present embodiment, a leak amount of the zeotropic refrigerant in the refrigeration apparatus 1 is detected using the change in the characteristics of the zeotropic refrigerant. There is a predetermined relationship between the liquid temperature and the liquid pressure of the saturated liquid of the zeotropic refrigerant, and the liquid pressure of the saturated liquid having a certain liquid temperature can be uniquely obtained. On the other hand, when a gas leak occurs, since the component ratio of the zeotropic refrigerant changes, the predetermined relationship also changes.

Table 1 shows the relationship between the liquid temperature and the liquid pressure in the saturated liquid, and the leak ratio as to R407H, which is an example of the zeotropic refrigerant. As described above, R407H in a normal state is a mixture of 32.5 wt% of R32, 15.0 wt% of R125, and 52.5 wt% of R134a. When a refrigerant leak occurs in a refrigerant circuit using R407H, R32 having the lowest boiling point evaporates to leak as gas to the outside.

**[Table 1]**

| | | | | |
|---|---|---|---|---|
| State | R407H (normal) | R32: -10% | R32: -30% | R32: -50% |
| R32 | 32.5% | 30.2% | 23.3% | 17.8% |
| R125 | 15.0% | 15.5% | 17.1% | 18.3% |
| R134a | 52.5% | 54.3% | 59.7% | 63.9% |
| Component ratio | R32; 0.325; R125; 0.15 ; R134a; 0.525 mass | R32; 0.302; R125; 0.155 ; R134a; 0.543 mass | R32; 0.233; R125; 0.171 ; R134a; 0.597 mass | R32; 0.178; R125; 0.183 ; R134a; 0.639 mass |

| Temperature [°C] | Saturated liquid pressure P [MPa abs] | Saturated liquid pressure P [MPa abs] | Saturated liquid pressure P [MPa abs] | Saturated liquid pressure P [MPa abs] |
|---|---|---|---|---|
| 10.0 | 0.67 | 0.66 | 0.61 | 0.58 |
| 15.0 | 0.79 | 0.77 | 0.72 | 0.68 |
| 20.0 | 0.92 | 0.90 | 0.84 | 0.79 |
| 25.0 | 1.06 | 1.04 | 0.97 | 0.92 |
| 30.0 | 1.22 | 1.20 | 1.12 | 1.06 |
| 35.0 | 1.40 | 1.37 | 1.29 | 1.22 |
| 40.0 | 1.60 | 1.57 | 1.47 | 1.39 |
| 45.0 | 1.82 | 1.79 | 1.68 | 1.59 |
| 50.0 | 2.07 | 2.02 | 1.90 | 1.80 |

Table 1 shows the relationship between the liquid temperature and the liquid pressure of the saturated liquid when R32 leaks by 10%, 30%, and 50% of a predetermined amount (normal amount). For example, in the case where the saturated liquid has a temperature of 40°C, the liquid pressure of the saturated liquid is 1.60 (MPa abs) when there is no refrigerant leak and R32 is at a normal component ratio (0.325), and the liquid pressure of the saturated liquid is 1.57 (MPa abs) when R32 leaks by 10% of the normal amount. Similarly, for various liquid temperature values, the liquid pressure at the normal component ratio and the liquid pressure when a predetermined ratio of R32 (in the example of Table 1, 10%, 30%, 50%) leaks can be obtained.

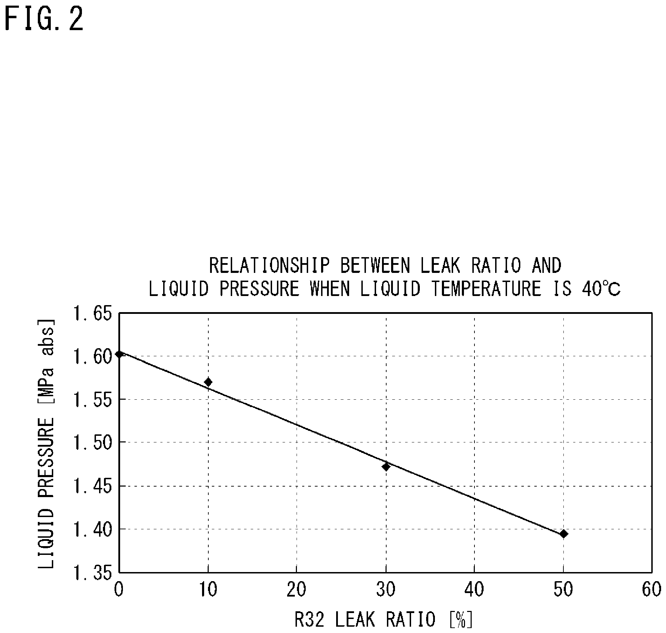

FIG. 2 is a diagram illustrating the relationship between the leak ratio and the liquid pressure in the saturated liquid of R407H having a liquid temperature of 40.0°C. FIG. 2 shows that the relationship between the leak ratio and the liquid pressure in the saturated liquid of R407H having a liquid temperature of 40.0°C can be represented by a linear function. Thus, a variable of the linear function representing the relationship between the leak ratio and the liquid pressure in the saturated liquid is previously obtained for the saturated liquid having various liquid temperature values. Accordingly, the degree of a gas leak occurring in the zeotropic refrigerant flowing through the refrigerant circuit 12 of the refrigeration apparatus 1, that is, the gas leak amount can be detected or estimated by measuring the liquid temperature and the liquid pressure of the saturated liquid of the zeotropic refrigerant. The refrigerant is in a saturated liquid state near downstream of the receiver 11. Thus, the liquid temperature and the liquid pressure of the saturated liquid of the zeotropic refrigerant can be respectively measured by the liquid temperature sensor T1 and the liquid pressure sensor P1, which are disposed near downstream of the receiver 11. Further, it is possible to obtain the leak ratio on the basis of the obtained liquid temperature and liquid pressure and detect the gas leak amount from the leak ratio (%). For example, the gas leak amount (kg) can be obtained by n × m × w ÷ 100, where n denotes the leak ratio (%), m denotes the normal component ratio of the leaked refrigerant, and w (kg) denotes the normal refrigerant charging amount of the refrigerant circuit 12.

A leak of the refrigerant charged inside the refrigerant circuit 12 by more than a certain amount interferes with the operation of the refrigeration apparatus 1. Thus, when the refrigerant leak amount exceeds a predetermined value (threshold), it is desired to detect this and issue an alarm. A user of the refrigeration apparatus 1 can make a search for a leak point or perform an operation for charging the leaked refrigerant (in the present embodiment, R32) in response to the alarm. For example, in the case of R407H having a liquid temperature of 40°C, an alarm can be issued when the liquid pressure drops by 0.21 MPa from 1.60 MPa, which is a predetermined value, and becomes 1.39 MP.

In the case where R407H is used as the refrigerant, when a gas leak occurs, as described above, R32 having the lowest boiling point evaporates to leak as gas. Thus, it is desired to additionally charge R32 into the refrigerant circuit 12. However, when there is no discrete cylinder for R32, R32 can be charged into the refrigerant circuit 12 by turning a cylinder for R407H or the like containing R32 as a component upside down.

When maintenance including charging of the leaked refrigerant can be performed within a short period of time in response to the occurrence of a gas leak, there is a small influence on the refrigerating operation. However, for example, in a refrigerating unit used in a ship which transports food which requires low-temperature storage, it is difficult to perform the maintenance under way. In this case, it is desired to optimize the refrigerating operation with a certain degree of gas leaked while charging the leaked refrigerant at any time as described above.

The present embodiment optimizes the operation of the refrigeration apparatus 1 under the condigion of a gas leak and performs an operation for minimizing the gas leak.

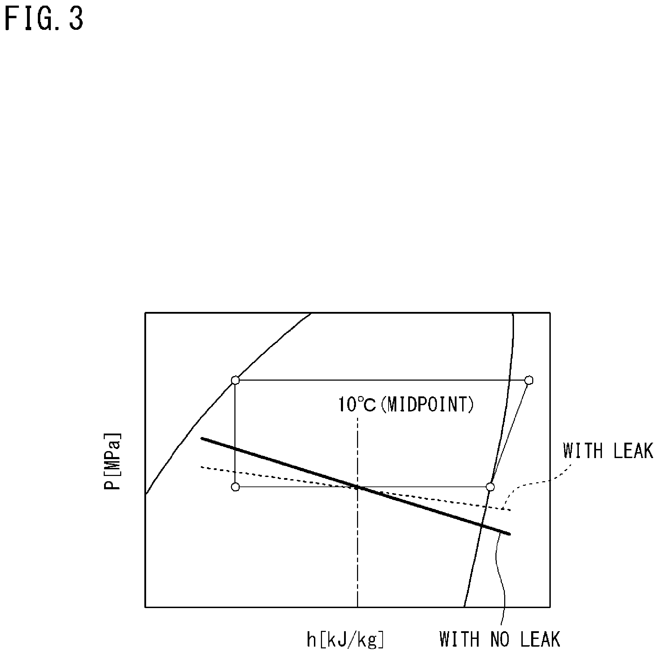

When an azeotropic refrigerant is used, the inlet temperature and the outlet temperature of the evaporator 4 are equal to each other, and a temperature obtained by adding a predetermined degree of superheating to the inlet or outlet temperature can be defined as an intake gas temperature of the compressor 7. For example, when the inlet temperature and the outlet temperature of the evaporator 4 are 10°C and the degree of superheating is 5°C, the intake gas temperature of the compressor 7 is 15°C. On the other hand, when a zeotropic refrigerant is used, a temperature ground is inclined, and the inclination gradually decreases as the gas leak amount increases. For example, in the case where the midpoint is 10°C, when there is no refrigerant leak (refer to a thick solid line in FIG. 3), and the inlet temperature of the evaporator 4 is 7°C, the outlet temperature of the evaporator 4 is the midpoint + (the midpoint - the inlet temperature of the evaporator 4) = 10 + (10 - 7) = 13°C. The intake gas temperature of the compressor 7 is 18°C which is obtained by adding the degree of superheating (5°C) to 13°C.

When the refrigerant leaks, the inclination of the temperature ground decreases (refer to a broken line in FIG. 3). In the case where the midpoint is 10°C, when the refrigerant leaks, the inlet temperature of the evaporator 4 becomes higher than that when there is no refrigerant leak, for example, becomes 8°C. At this time, on the Mollier diagram, the outlet temperature of the evaporator 4 is 10°C + (10°C - 8°C) = 12°C. In the present embodiment, control is performed so that the intake gas temperature of the compressor 7 becomes 17°C which is obtained by adding the degree of superheating (5°C) to 12°C. Specifically, the opening degree of the cooling expansion valve 6 is adjusted, that is, control for increasing the opening degree is performed in the case of the above example. Accordingly, it is possible to perform an optimum operation by changing the temperature for control according to the leak amount.

Further, in view of the fact that the refrigerant leak amount increases as the refrigerant pressure inside the refrigerant circuit 12 increases, the present embodiment performs control for reducing the pressure of the refrigerant to minimize the refrigerant leak amount.

Specifically, it is possible to reduce the pressure of the refrigerant to minimize the refrigerant leak amount by employing at least one of the following (1) to (3).
(1) The frequency of the compressor 7 is reduced according to the gas leak amount. The pressure on the high-pressure side can be made lower than that in the normal operation by reducing the frequency of the compressor 7. Accordingly, even in a state with a gas leak, the degree of the gas leak can be reduced.
(2) The airflow volume of the fan 10 of the condenser 9 is increased. The pressure on the high-pressure side can be made lower than that in the normal operation by increasing the airflow volume of the fan 10 of the condenser 9. Accordingly, even in a state with a gas leak, the degree of the gas leak can be reduced.
(3) The airflow volume of the fan 5 of the evaporator 4 is reduced. The pressure on the low-pressure side can be made lower than that in the normal operation by reducing the airflow volume of the fan 5 of the evaporator 4. Accordingly, even in a state with a gas leak, the degree of the gas leak can be reduced.

### [Modification]

The present invention is not limited to the embodiment described above and can be variously modified within the range of the claims.

For example, although the above embodiment describes the relationship between the liquid temperature, the liquid pressure, and the leak ratio in the zeotropic refrigerant using R407H as an example, the same applies to another zeotropic refrigerant such as R407C. That is, the gas leak amount can be detected on the basis of the measured liquid temperature and liquid pressure of a saturated liquid also for, for example, R407C.

### REFERENCE SIGNS LIST

1: REFRIGERATION APPARATUS
2: UNIT COOLER
3: REFRIGERATOR
4: EVAPORATOR
5: FAN
6: COOLING EXPANSION VALVE
7: COMPRESSOR
8: FOUR-WAY SWITCHING VALVE
9: CONDENSER
10: FAN
11: RECEIVER
12: REFRIGERANT CIRCUIT
P1: LIQUID PRESSURE SENSOR
P2: LOW-PRESSURE SENSOR
P3: HIGH-PRESSURE SENSOR
T1: LIQUID TEMPERATURE SENSOR
T2: INLET TEMPERATURE SENSOR
T3: OUTLET TEMPERATURE SENSOR

## Claims

1. A gas leak amount detection method comprising: detecting, in a refrigerant circuit (12) using a zeotropic refrigerant, a gas leak amount on the basis of a liquid temperature and a liquid pressure of a saturated liquid of the zeotropic refrigerant, **characterized in that** the gas leak amount is detected from a relationship between the liquid pressure and a refrigerant leak ratio in the saturated liquid at a certain liquid temperature, a normal refrigerant charging amount of the refrigerant circuit (12), and a normal component ratio of the zeotropic refrigerant.

2. A method for operating a refrigeration apparatus (1) using a zeotropic refrigerant, the method comprising: adjusting an opening degree of a cooling expansion valve (6) by correcting a temperature ground according to a gas leak amount detected by the gas leak amount detection method according to claim 1.

3. A method for operating a refrigeration apparatus (1) using a zeotropic refrigerant, the method comprising: reducing a frequency of a compressor (7) according to a gas leak amount detected by the gas leak amount detection method according to claim 1.

4. A method for operating a refrigeration apparatus (1) using a zeotropic refrigerant, the method comprising: increasing an airflow volume of a fan (10) of a condenser (9) according to a gas leak amount detected by the gas leak amount detection method according to claim 1.

5. A method for operating a refrigeration apparatus (1) using a zeotropic refrigerant, the method comprising: reducing an airflow volume of a fan (5) of an evaporator (4) according to a gas leak amount detected by the gas leak amount detection method according to claim 1.

## Patentansprüche

1. Verfahren zum Erfassen einer Gasleckmenge, umfassend:
Erfassen einer Gasleckmenge in einem Kältemittelkreislauf (12), der ein zeotropes Kältemittel verwendet, auf der Grundlage einer Flüssigkeitstemperatur und eines Flüssigkeitsdrucks einer gesättigten Flüssigkeit des zeotropen Kältemittels, **dadurch gekennzeichnet, dass** die Gasleckmenge aus einer Beziehung zwischen dem Flüssigkeitsdruck und einem Kältemittelleckverhältnis in der gesättigten Flüssigkeit bei einer bestimmten Flüssigkeitstemperatur, einer normalen Kältemittelfüllmenge des Kältemittelkreislaufs (12) und einem normalen Komponentenverhältnis des zeotropen Kältemittels erfasst wird.

2. Verfahren zum Betreiben einer Kühleinrichtung (1), die ein zeotropes Kältemittel verwendet, wobei das Verfahren umfasst: Einstellen eines Öffnungsgrades eines Kühlexpansionsventils (6) durch Korrigieren einer Temperatursohle gemäß einer Gasleckmenge, die durch das Verfahren zum Erfassen einer Gasleckmenge nach Anspruch 1 erfasst wird.

3. Verfahren zum Betreiben einer Kühleinrichtung (1), die ein zeotropes Kältemittel verwendet, wobei das Verfahren umfasst:
Reduzieren einer Frequenz eines Kompressors (7) gemäß einer Gasleckmenge, die durch das Verfahren zum Erfassen einer Gasleckmenge nach Anspruch 1 erfasst wird.

4. Verfahren zum Betreiben einer Kühleinrichtung (1), die ein zeotropes Kältemittel verwendet, wobei das Verfahren umfasst:
Erhöhen eines Luftstromvolumens eines Gebläses (10) eines Kondensators (9) gemäß einer Gasleckmenge, die durch das Verfahren zum Erfassen einer Gasleckmenge nach Anspruch 1 erfasst wird.

5. Verfahren zum Betreiben einer Kühleinrichtung (1), die ein zeotropes Kältemittel verwendet, wobei das Verfahren umfasst:
Reduzieren eines Luftstromvolumens eines Gebläses (5) eines Verdampfers (4) gemäß einer Gasleckmenge, die durch das Verfahren zum Erfassen einer Gasleckmenge nach Anspruch 1 erfasst wird.

## Revendications

1. Procédé de détection de quantité de fuite de gaz comprenant : une détection, dans un circuit de réfrigérant (12) utilisant un réfrigérant zéotropique, d'une quantité de fuite de gaz sur la base d'une température de liquide et d'une pression de liquide d'un liquide saturé du réfrigérant zéotropique, **caractérisé en ce que** la quantité de fuite de gaz est détectée à partir d'une relation entre la pression de liquide et un rapport de fuite de réfrigérant dans le liquide saturé à une certaine température de liquide, d'une quantité de chargement de réfrigérant normale du circuit de réfrigérant (12), et d'un rapport de composants normal du réfrigérant zéotropique.

2. Procédé de fonctionnement d'un appareil de réfrigération (1) utilisant un réfrigérant zéotropique, le procédé comprenant : un ajustement d'un degré d'ouverture d'une soupape de détente de refroidissement (6) en corrigeant un plan de température selon une quantité de fuite de gaz détectée par le procédé de détection de quantité de fuite de gaz selon la revendication 1.

3. Procédé de fonctionnement d'un appareil de réfrigération (1) utilisant un réfrigérant zéotropique, le procédé comprenant : une réduction d'une fréquence d'un compresseur (7) selon une quantité de fuite de gaz détectée par le procédé de détection de quantité de fuite de gaz selon la revendication 1.

4. Procédé de fonctionnement d'un appareil de réfrigération (1) utilisant un réfrigérant zéotropique, le procédé comprenant : une augmentation d'un volume d'écoulement d'air d'un ventilateur (10) d'un condenseur (9) selon une quantité de fuite de gaz détectée par le procédé de détection de quantité de fuite de gaz selon la revendication 1.

5. Procédé de fonctionnement d'un appareil de réfrigération (1) utilisant un réfrigérant zéotropique, le procédé comprenant : une réduction d'un volume d'écoulement d'air d'un ventilateur (5) d'un évaporateur (4) selon une quantité de fuite de gaz détectée par le procédé de détection de quantité de fuite de gaz selon la revendication 1.
